Europäisches Patentamt

European Patent Office

Office européen des brevets

(11) Publication number: **0 417 311 A1**

# (12) EUROPEAN PATENT APPLICATION
## published in accordance with Art. 158(3) EPC

(21) Application number: 90904652.6

(22) Date of filing: 14.03.90

(86) International application number:
PCT/JP90/00336

(87) International publication number:
WO 90/10512 (20.09.90 90/22)

(51) Int. Cl.⁵: **B21D 37/20**, B23Q 41/00, B23Q 15/00, B30B 13/00, G06F 15/60, B23P 13/00

(30) Priority: 14.03.89 JP 59783/89

(43) Date of publication of application:
20.03.91 Bulletin 91/12

(84) Designated Contracting States:
CH DE FR GB IT LI

(71) Applicant: KABUSHIKI KAISHA KOMATSU SEISAKUSHO
3-6, Akasaka 2-chome
Minato-ku Tokyo 107(JP)

(72) Inventor: AKATSU, Jisaku
6-22-17, Tomioka-nishi Kanazawa-ku
Yokohama-shi Kanagawa-ken 236(JP)
Inventor: ABE, Toshio
3-42-14, Kugayama Suginami-ku
Tokyo 168(JP)

(74) Representative: TER MEER - MÜLLER - STEINMEISTER & PARTNER
Mauerkircherstrasse 45
W-8000 München 80(DE)

(54) **PROCESS FOR PRODUCING MOLD.**

(57) A process for producing a mold, capable of automatically carrying out a series of operations from the designing of a mold through the trial working, in accordance with the characteristics of an industrial machine in which the mold is used, for the purpose of greatly reducing the time for the trial working without the necessity for shape correction after the completion of the trial working. The process consists of the steps of collecting information on the characteristics of an industrial machine (11) in an on-load operation, storing the information in a memory (2), producing a mold by CAM (3) after correcting, by using this information, the drawing data inputted from CAD (1) prior to the production of the mold, and installing the produced mold in the industrial machine to carry out a trial working (5).

FIG. 2

MOLD REGISTERING

TRIAL OPERATION

1 — CAD

2 FILE OF VARIOUS CHARACTERISTICS OF MACHINE

3 — CAM

4 — WITH DIE POTTING PRESS

5 — WITH INDUSTRIAL MACHINE

## MOLD PRODUCTION PROCESS

### TECHNICAL FIELD OF THE INVENTION

This invention relates to a mold production process for continuously effecting design, producing and trial operation steps of molds used mainly in industrial machines such as transfer presses.

### BACKGROUND ART OF THE INVENTION

With the development of automation using computors in recent years, it has become possible to produce molds used in industrial machines such as transfer presses by a mold production process wherein the whole steps from the design of molds to the finishing thereof are automated using CAD and CAM.

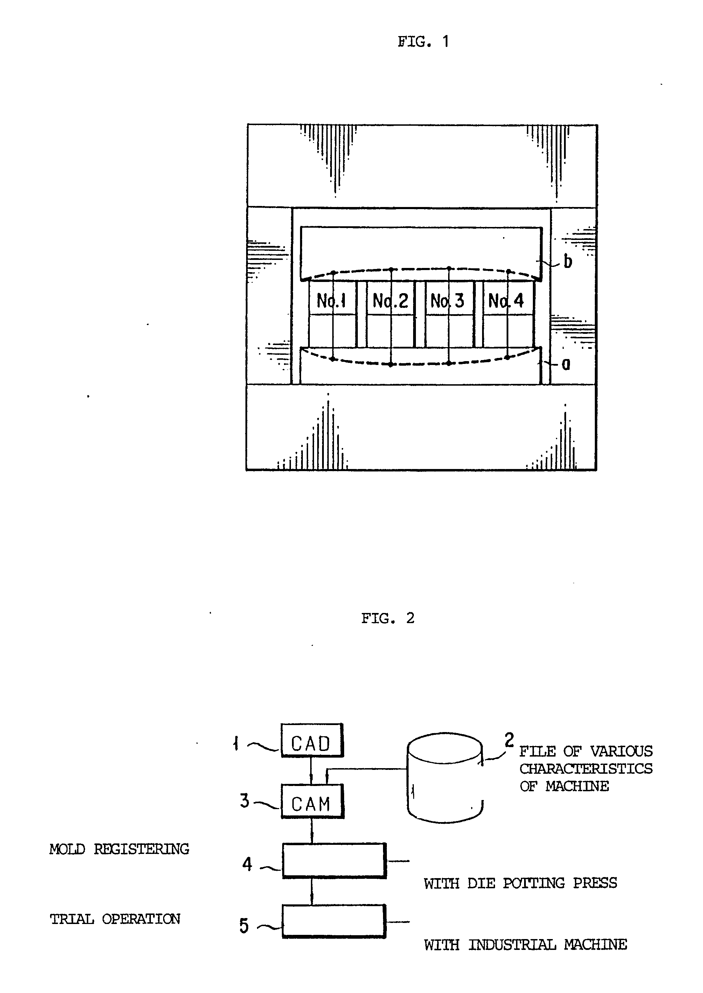

However, in such industrial machines as transfer presses wherein a plurality of molds are used at the same time to produce products, during molding process, since a bolster "a" and a slide "b" are deflected due to molding load as shown in Fig. 1, in particular at second and third working stations NOS. 2 and 3 wherein a material to be molded is subjected to comparatively large influence of the deflection, it is impossible to obtain a desired working accuracy in some cases.

Further, since the aforementioned deflection is peculiar to industrial machines can varies with individual machines even if they are of the same kind, the following correction has heretofore been made so that a desired working accuracy is obtained in accordance with the characteristics of the industrial machine using molds.

Stating more specifically, molds produced by an automatic mold production process are checked for unevenness one by one using die potting process at the finishing process, and uneven portions are subjected to grinding again, but at this stage, testing of the industrial machine having the corrected molds mounted thereon have not yet been carried out.

Subsequently, the above-mentioned adjusted molds are brought into the industrial machine installed in production line and mounted at each working station. Thereafter, trial operation is conducted, and then correction to the shape of the molds is made depending on the intuition of the operator according to the characteristics peculiar to the machine involved. Since this correction work is made over a long period of time, it has been a large obstacle in that it delays the commencement of operation of the production line involved. Further, in case the molds are used in another different industrial machine, corrections to the molds must be made again according to the characteristics of the machine, thus causing difficulties such as marked reduction in productivity.

### SUMMARY OF THE INVENTION

The present invention has been made in view of the above-mentioned circumstances, and has for its object to provide a mold production process wherein the whole steps from the design of molds to the trial operation thereof can be automatically effected according to the characteristics of the industrial machine to be used so as to achieve a marked curtailing of the period of trial operations.

To achieve the above-mentioned object, according to a first aspect of the present invention, there is provided a mold production process comprising the steps of gathering previously information on the characteristics of an industrial machine using molds under loading; correcting, when making molds, the drawing and data inputted from CAD according to the information and subsequently producing the molds by means of CAM; mounting the molds thus produced on the industrial machine; and then effecting trial operation.

According to a second aspect of the present invention, there is provided a mold production process as set forth in the first aspect, characterized in that in case the trial operation is made in an industrial machine having a plurality of working stations the trial operation comprises the steps of gathering previously information on the characteristics of the machine at each working station; storing the information in a storage unit; and conducting trial runs on the basis of the information independently at each working station, or at the plurality of working stations at the same time.

The above-mentioned and other objects, aspects and advantages of the present invention will become apparent to those skilled in the art by making reference to the following description and the accompanying drawings in which preferred embodiments incorporating the principles of the present invention are shown by way of example only.

### BRIEF DESCRIPTION OF THE DRAWINGS

Fig. 1 is a schematic front view of a transfer press for explaining the influence by the deflection of a bolster and a slide on the material to be molded at each working station;

Fig. 2 is a block diagram showing the outline of the production process according to the present invention;

Figs. 3 to 5 are explanatory views showing the processes for obtaining the characteristics data in a transfer press; Fig. 3 is a graph showing elongation of the overall machine relative to the loading during the molding process; Fig. 4 is a schematic front view of the transfer press for explaining changes in the amount of die height at each working station in case the molding load on a material to be molded varies at each of the working stations; and Fig. 5 shows simulation of trial operations made by each working station or at working stations in combination.

DETAILED DESCRIPTION OF THE PREFERRED EMBODIMENTS

The present invention will now be described below by way of example only with reference to the accompanying drawings.

Fig. 2 is a block diagram showing schematically the mold production process according to the present invention.

This production process includes CAD 1 for automatically effecting the design of a mold 10. The drawing of the mold designed by CAD 1 is sent to CAM 3 for automatically producing the molds 10, together with data outputted by a storage unit 2 in which the characteristics of an industrial machine 11 using the molds 10 is stored previously as information, and then the molds 10 are produced.

The data on the industrial machine 11 stored in the above-mentioned storage unit 2 includes the following, and the arrangement is made such that whether or not the industrial machine with the molds mounted thereon can be operated practically can be discriminated by simulating the operation thereof.

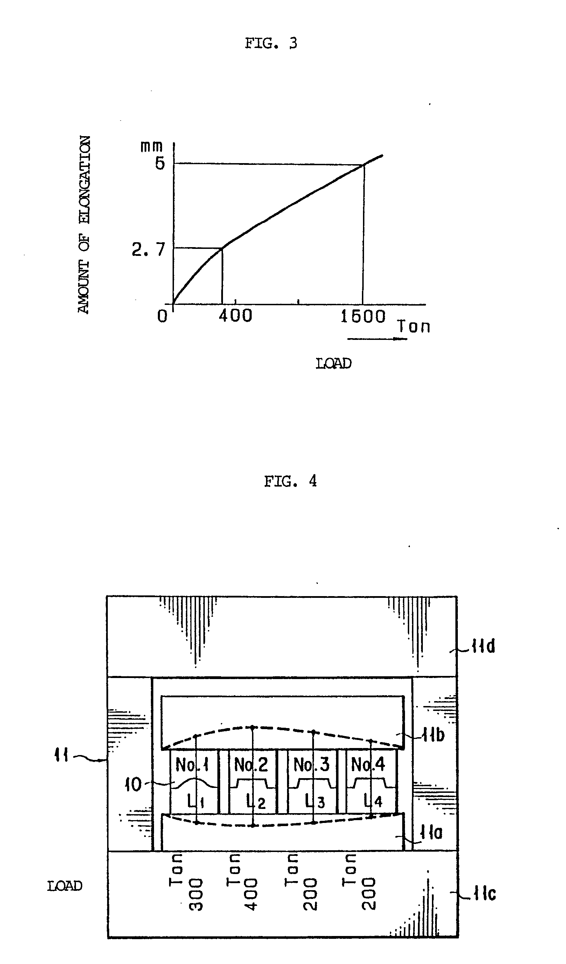

Stating more specifically, in case the industrial machine 11 is a transfer press, for example, elongation of the whole machine occurs due to the loading during molding process, as shown in Fig. 3.

Further, in case the molding load varies at each of NOS. 1 to 4 working stations, during the molding process, deflection of a bolster 11a, a slide 11b, a bed 11c and a crown 11d occurs in accordance with the loading as shown in Fig. 4, so that the amount of die height varies, for example, as $L_1$, $L_2$ ... $L_4$ at the working stations, respectively.

The data on the amount of die height are stored in the storage unit 2.

Further, the factors which cause changes in the molding load at each of the working stations NOS. 1, 2, 3 and 4 include deformation of frames constituting the machine proper in the transverse and longitudinal directions, the present value of die cushion and variations in the arrangement and height of cushion pin where the die cushion is used, the rigidity of the molds 10 and the pressure exerted thereon when the molds are mounted on the machine, the amount of lubricating oil to be supplied, the material and thickness of a work, the shape of the beads and the like.

Whilst, CAM 3 produces the molds 10 on the basis of data obtained by using the data inputted by CAD 1 and the storage unit 2 to CAM 3 as a basic data and correcting the drawing and data prepared by CAD 1 according to the characteristics of the actual industrial machine 11.

The molds 10 thus produced are sent to a mold registering step 4. At the mold registering step 4, a die potting press is used to check the molds 10 for unevenness, and corrections to the contact surfaces of the molds are made according to the characteristics of the industrial machine 11 which is used practically, and then carried to the latter where the mold 10 is mounted at each of working stations NOS. 1, 2, 3 and 4.

After that, trial operation step 5 is carried out using the actual machine having the molds 10 mounted thereon, since the molds 10 mounted at the working stations NO. 1 to NO. 4 have already been corrected according to the characteristics of the industrial machine 10, manufacture of products can be commenced with almost no need for correction to the shape of the molds at trial operations.

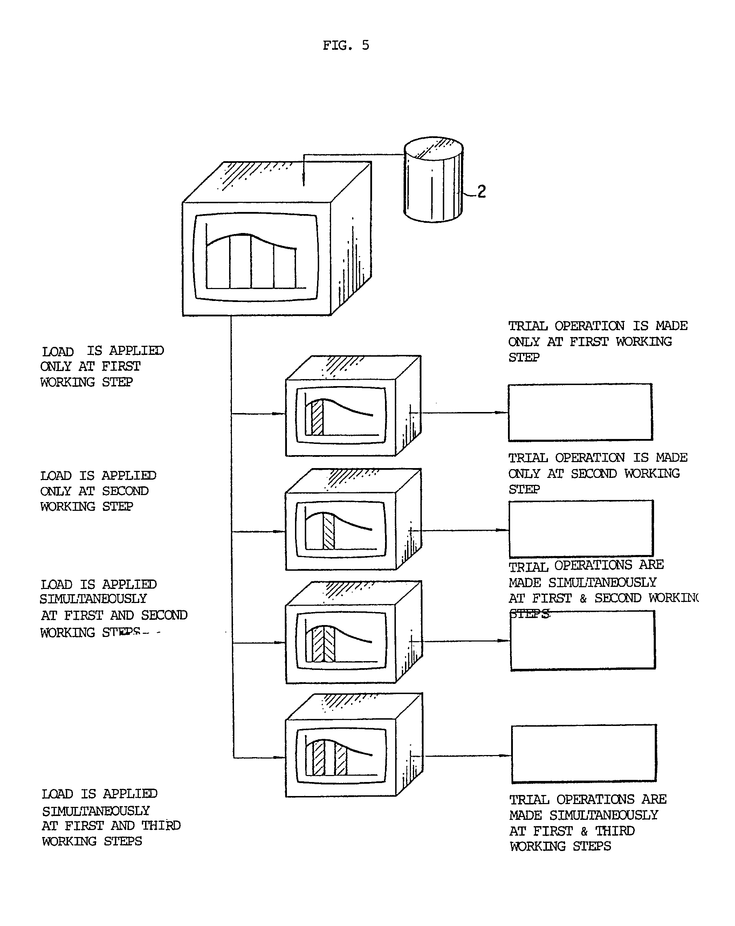

Further, Fig. 5 shows simulation in case trial operation is made at each of the working stations NO. 1 to NO. 4. When it is commanded by the computer to effect trial operation step by each of the working stations NOS. 1 to 4 in the mold production process, first of all, simulation of trial operation step at NO. 1 working station is made so that the amount of deformation of the molds due to the load then applied is taken as data.

Thereafter, simulations of trial operation steps at working stations NOS. 2 and 3, respectively are made in turn. Alternatively, simulations of trial operations at working stations NOS. 1 and 2 or NOS. 1 and 3 are made simultaneously and the amount of deformation of the mold obtained at that time is taken as data each time. By correcting data from CAD 1 during the production of the molds 10 according to the data on the amount of deformation of the molds, molding of many kinds of works, each kind being limited in quantity, using part of working stations NOS. 1 to 4 can be dealt with.

As described in detail hereinabove, according to the present invention, since the mold production process is conducted by storing previously data on the characteristics of the industrial machine using the molds in the storage unit, inputting the data to CAM at the time of production of the molds so as to correct the data from CAD, the molds produced by CAM have been corrected according to the characteristics of the actual machine so that in case trial operation of the industrial machine having the molds mounted thereon is made there is almost no need for correcting the shape of them, with the result that the period of trial operations can be curtailed sharply.

In particular, in industrial machines having many working stations such as transfer presses, since the characteristics of the machine differ between the case all the working stations are used and the case only part of the working stations is used, it has been essential to make corrections to the shape of the molds after trial operations. However, such problem can be solved by utilizing the mold production process according to the present invention.

The above-mentioned description is merely illustrative of preferred embodiment of the present invention, and the scope of the present invention is not to be limited thereto. Many changes and modifications of the present invention will occur to those skilled in the art without departing from the scope of the present invention.

## Claims

1. A mold production process comprising the steps of gathering previously information on the characteristics of an industrialmachine using molds under loading; correcting, when making molds, the drawing and data inputted from CAD according to said information and subsequently producing the molds by means of CAM; mounting the molds thus produced on said industrial machine; and then effecting trial operation.

2. A mold production process as claimed in claim 1, characterized in that in case said trial operation is made in the industrial machine having a plurality of working stations the trial operation comprises the steps of gathering information on the characteristics of the machine at each working station; storing the information in a storage unit; conducting trial runs on the basis of the information independently at each working station, or at the plurality of working stations at the same time.

FIG. 1

FIG. 2

FIG. 3

FIG. 4

FIG. 5

LOAD IS APPLIED
ONLY AT FIRST
WORKING STEP

TRIAL OPERATION IS MADE
ONLY AT FIRST WORKING
STEP

LOAD IS APPLIED
ONLY AT SECOND
WORKING STEP

TRIAL OPERATION IS MADE
ONLY AT SECOND WORKING
STEP

LOAD IS APPLIED
SIMULTANEOUSLY
AT FIRST AND SECOND
WORKING STEPS

TRIAL OPERATIONS ARE
MADE SIMULTANEOUSLY
AT FIRST & SECOND WORKING
STEPS

LOAD IS APPLIED
SIMULTANEOUSLY
AT FIRST AND THIRD
WORKING STEPS

TRIAL OPERATIONS ARE
MADE SIMULTANEOUSLY
AT FIRST & THIRD
WORKING STEPS

# INTERNATIONAL SEARCH REPORT

International Application No PCT/JP90/00336

## I. CLASSIFICATION OF SUBJECT MATTER (if several classification symbols apply, indicate all) 6

According to International Patent Classification (IPC) or to both National Classification and IPC

Int. Cl5    B21D37/20, B23Q41/00, B23Q15/00, B30B13/00, G06F15/60, B23P13/00

## II. FIELDS SEARCHED

### Minimum Documentation Searched 7

| Classification System | Classification Symbols |
|---|---|
| IPC | B21D37/20, B23Q41/00, B23Q15/00, B30B13/00, G06F15/60, B23P13/00 |

### Documentation Searched other than Minimum Documentation to the Extent that such Documents are Included in the Fields Searched 8

| | |
|---|---|
| Jitsuyo Shinan Koho | 1970 – 1989 |
| Kokai Jitsuyo Shinan Koho | 1970 – 1989 |

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| A | JP, A, 47-5442 (Dickomp Inc.), 18 March 1972 (18. 03. 72), (Family: none) | 1, 2 |
| A | Hiromi Yoshida (auther) "CAD/CAM of Metal Mold", 13 August 1983 (13. 08. 83), Nikkan Kogyo (Tokyo), p.156-157, p.182 | 1, 2 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance. the claimed invention cannot be considered novel or cannot be considered to involve an inventive step

"Y" document of particular relevance; the claimed invention cannot be considered to involve an inventive step when the document is combined with one or more other such documents. such combination being obvious to a person skilled in the art

"&" document member of the same patent family

## IV. CERTIFICATION

| Date of the Actual Completion of the International Search | Date of Mailing of this International Search Report |
|---|---|
| June 6, 1990 (06. 06. 90) | June 18, 1990 (18. 06. 90) |
| International Searching Authority | Signature of Authorized Officer |
| Japanese Patent Office | |

Form PCT.ISA 210 (second sheet) (January 1985)